(19) Europäisches Patentamt
European Patent Office
Office européen des brevets

(11) **EP 1 818 662 A1**

(12) **EUROPÄISCHE PATENTANMELDUNG**

(43) Veröffentlichungstag:
**15.08.2007 Patentblatt 2007/33**

(51) Int Cl.:
*G01M 11/02* (2006.01)  *G02C 7/02* (2006.01)

(21) Anmeldenummer: **07003061.4**

(22) Anmeldetag: **13.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **14.02.2006   DE 102006006794**

(71) Anmelder: **Rodenstock GmbH**
**80469 München (DE)**

(72) Erfinder: **Gruna, Fritz**
**84453 Mühldorf (DE)**

(74) Vertreter: **Müller-Boré & Partner**
**Patentanwälte**
**Grafinger Strasse 2**
**81671 München (DE)**

(54) **Vorrichtung zum Visualisieren und/oder Bestimmen der Verzeichnung, Verfahren und Verwendung**

(57)   Zusammenfassend betrifft die vorliegende Erfindung eine Vorrichtung (42) zum Visualisieren und/oder Bestimmen einer Verzeichnung eines Brillenglases (10) mit
- einer Anordnungseinrichtung (48) und
- einer Lochblende (44), wobei
die Anordnungseinrichtung (48) ausgelegt ist,
- ein abzubildendes Objekt (60),
- ein Brillenglas (10),
- die Lochblende (44) und
- eine bildformende Einrichtung (46)
entsprechend einer vorbestimmten bzw. vorbestimmbaren Position derart zu positionieren, daß das Objekt (60) anhand des Brillenglases (10) und der Lochblende (44) auf die bildformende Einrichtung (46) abbildbar ist sowie ein Verfahren zum Visualisieren und/oder Bestimmen einer Verzeichnung eines Brillenglases (10) und eine Verwendung einer Vorrichtung (42) zum Visualisieren und/oder Bestimmen einer Verzeichnung eines Brillenglases (10).

Figur 1

EP 1 818 662 A1

**EP 1 818 662 A1**

**Beschreibung**

Die vorliegende Erfindung betrifft eine Vorrichtung zum Visualisieren und/oder Bestimmen einer Verzeichnung eines Brillenglases, ein Verfahren zum Visualisieren und/oder Bestimmen einer Verzeichnung eines Brillenglases sowie eine Verwendung einer Vorrichtung zum Visualisieren und/oder Bestimmen der Verzeichnung eines Brillenglases.

Zur anschaulichen Darstellung von Verzeichnungen von Brillengläsern sind sogenannte Gitterdarstellungen gebräuchlich. Dazu wird im Objektraum beispielsweise ein äquidistantes Gitter durch ein Brillenglas betrachtet. Die Betrachtung kann mit dem unbewaffneten Auge oder photographisch erfolgen. Weiterhin sind Prüfanordnungen bekannt, bei denen mittels eines speziellen Kameraobjektivs eine Prüfung entsprechend einer Gebrauchsstellung des Brillenglases gemäß einem System Brillenglas und Kopf bzw. Brille und Kopf des Brillenträgers geprüft wird. Das Kameraobjektiv wird hierbei derart angeordnet, daß die Position des Kameraobjektivs relativ zu dem Brillenglas der Position des Auges relativ zu dem Brillenglas entspricht.

Des weiteren sind Vorrichtungen bekannt, bei denen die Topographie von Vorder- und Rückfläche eines Brillenglases gemessen wird und in einem Rechner die Modellierung in Gebrauchslage erfolgt, d.h., daß der Strahlengang durch das vermessene Brillenglas anhand eines Computers simuliert bzw. berechnet wird und die Verzeichnung dadurch bestimmt wird.

Es ist eine Aufgabe der vorliegenden Erfindung, die Darstellung, Messung oder Prüfung der Verzeichnung schnell frei von systematischen Fehlern und ohne aufwendige Bewegungsmechanik durchzuführen, unabhängig von der jeweiligen Wirkung des Brillenglases, wobei die Verzeichnungsmessung sowohl qualitativ als auch quantitativ für beliebige Brillengläser in Gebrauchsstellung möglich sein soll.

Diese Aufgabe wird gelöst durch die Vorrichtung gemäß Anspruch 1, das Verfahren gemäß Anspruch 17 und die Verwendung gemäß Anspruch 19. Bevorzugte Ausführungsformen sind Gegenstand der abhängigen Ansprüche.

Gemäß einem Aspekt der Erfindung wird eine Vorrichtung zum Visualisieren und/oder Bestimmen einer Verzeichnung eines Brillenglases mit

- einer Anordnungseinrichtung und
- einer Lochblende bereitgestellt, wobei

die Anordnungseinrichtung ausgelegt ist,

- ein abzubildendes Objekt,
- ein Brillenglas,
- die Lochblende und
- eine bildformende Einrichtung

entsprechend einer vorbestimmten bzw. vorbestimmbaren Position derart zu positionieren, daß das Objekt anhand des Brillenglases und der Lochblende auf die bildformende Einrichtung abbildbar ist.

Vorteilhafterweise ermöglicht die erfindungsgemäße Vorrichtung sowohl eine qualitative als auch eine quantitative Verzeichnungsanalyse von beliebigen Brillengläsern. Weiterhin vorteilhafterweise ist die Verzeichnungsanalyse im wesentlichen frei von systematischen Fehlern.

Der Begriff "Verzeichnung" im Sinne der vorliegenden Erfindung ist eine Änderung des Abbildungsmaßstabes im Bildfeld mit zunehmendem Abstand von der optischen Achse. Der Begriff "Verzeichnung" wird folglich gleichbedeutend eingesetzt, wie in dem einschlägigen Fachbuch "Technische Optik" von G. Schröder, 1977, Vogel-Verlag, Würzburg, definiert.

Eine Lochblende im Sinne der vorliegenden Erfindung ist ein lichtabschattendes Element, beispielsweise ein im wesentlichen lichtundurchlässiger Körper mit einer Öffnung. Die Öffnung kann im Querschnitt im wesentlichen kreisförmig sein oder von der Kreisform abweichen. Beispielsweise kann die Öffnung im Querschnitt die Form einer Ellipse aufweisen. Die Öffnung kann im Querschnitt auch im wesentlichen rechteckig bzw. quadratisch sein. Ferner kann die Öffnung der Lochblende variabel ausgebildet sein. Bei einer im Querschnitt im wesentlichen kreisförmigen Öffnung der Lochblende, kann der Radius variierbar sein. Analog können, wenn die Öffnung der Lochblende im Querschnitt im wesentlichen rechteckig bzw. quadratisch ist, die Seitenlängen variierbar sein. Die Lochblende kann beispielsweise eine Vielzahl von beweglichen Elementen umfassen, welche relativ zueinander beweglich angeordnet sind und insbesondere relativ zueinander verschoben werden können. Die Lochblende kann eine Platte mit im wesentlichen planen Oberflächen umfassen, welche beispielsweise im wesentlichen im Zentrum eine Öffnung in Form eines Bohrlochs aufweisen. Die Lochblende kann eine dünne Platte umfassen. Die Lochblende ist weiterhin vorzugsweise derart ausgebildet und angeordnet, daß von dem Brillenglas ausgehendes Licht auf die bildformende Einrichtung gelangt. Weiterhin tritt vorzugsweise alles Licht, das auf die bildformende Einrichtung tritt im wesentlichen ausschließlich durch die Öffnung der Lochblende hindurch.

In anderen Worten ist eine Lochblende im Sinne der vorliegenden Erfindung ein bildformendes Element mit definierter radialer Ausdehnung zur Bilderzeugung bei gleichzeitiger Unterdrückung von Eigenverzeichnung durch die geringe radiale Ausdehnung in Bezug auf die optische Achse.

Vorzugsweise weist eine Öffnung der Lochblende einen Durchmesser zwischen etwa 0,1 mm und etwa 0,3 mm auf.

Ferner kann sich eine Lochblende im Sinne der vorliegenden Erfindung auch dadurch auszeichnen, daß die Lochblende keine weiteren optischen Elemente wie z.B. Prismen, Linsen, usw. aufweist. In anderen Worten befinden sich im Strahlengang zwischen dem Brillenglas und der Lochblende keine weiteren optischen Elemente sondern lediglich ein Medium mit im wesentlichen konstantem Brechungsindex. Beispielsweise kann zwischen dem Brillenglas und der Lochblende Luft sein. Ebenso befindet sich zwischen der Lochblende und der bildformenden Einrichtung vorzugsweise kein weiteres optisches Element, sondern beispielsweise lediglich ein Medium mit im wesentlichen konstantem Brechungsindex. Zwischen der Lochblende und der bildformenden Einrichtung kann Luft sein.

Alternativ können im Strahlengang der Lochblende auch weitere optische Elemente, wie z.B. Prismen, Linsen, usw. angeordnet sein.

Eine Verzeichnungsverfälschung durch zusätzliche optische Elemente mit Eigenverzeichnung, wie dies beispielsweise aufgrund eines Kameraobjektivs mit beachtlicher radialer Ausdehnung häufig der Fall ist, wird daher vorteilhafterweise gerade vermieden.

Der Begriff Positionieren umfaßt beispielsweise die Bedeutung Aufnehmen, Anordnen und/oder Halten.

Die Auslegung des Begriffs "im wesentlichen kreisförmig" umfaßt "exakt kreisförmig". Der Begriff "im wesentlichen kreisförmig" im Sinne dieser Erfindung kann aber auch umfassen, daß von der Kreisform abgewichen wird. Beispielsweise kann aufgrund von Fertigungstoleranzen von der Kreisform abgewichen werden. Es ist daher auch möglich, daß der Radius bzw. der Durchmesser der Öffnung der Lochblende nicht konstant ist, sondern, in Zylinderkoordinaten ausgedrückt, bei verschiedenen Rotationswinkeln verschiedene Radien bzw. Durchmesser vorliegen. Die Abweichung von dem vorgegebenen Radius bzw. dem vorgegebenen Durchmesser, welcher die vorgegebene Kreisform bestimmt, beträgt hierbei jedoch weniger als 10%. Folglich beinhaltet die Formulierung "im wesentlichen" die Abweichung vom Wortsinn eines Begriffs, insbesondere innerhalb von Fertigungstoleranzen bzw. eine Abweichung von bis zu 10% vom Wortsinn des Begriffs. Die Formulierung "im wesentlichen kreisförmig" wurde als anschauliches Beispiel ausgeführt und die Auslegung von "im wesentlichen", wie vorangehend beschrieben, ist für jede Verwendung in Kombination mit beliebigen in der Beschreibung der vorliegenden Erfindung gewählten Begriffen allgemeingültig.

Visualisieren der Verzeichnung im Sinne der Erfindung umfaßt beispielsweise das Betrachten der Verzeichnung durch einen Beobachter.

Bestimmen umfaßt beispielsweise das exakte Darstellen des abgebildeten Objekts durch die bildformende Einrichtung und/oder das mathematische Bestimmen der Verzeichnung.

Die Verzeichnung $V_{i,j}$ im Sinne der vorliegenden Erfindung ergibt sich anhand einer paraxialen Bildgröße $y'_{i,j}$ des abzubildenden Objekts einer trigonometrischen Bildgröße $y'_{i,j}$ des abzubildenden Objekts bei Bündelneigung i, j zu:

$$V_{i,j} = \frac{\tilde{y'}_{i,j} - y'_{i,j}}{y'_{i,j}}.$$

Als abzubildendes Objekt wird beispielsweise ein Strichgitter, ein Pfeil oder ähnliches verwendet.

Neben der Abbildung von Testtargets gestatten gerade die Abbildungen von komplexen Seheindrücken, bei gleichem experimentellem Aufwand, auch dem Nichtbrillenträger einen recht anschaulichen Eindruck von der Verzeichnungswahrnehmung eines Brillenträgers.

Vorzugsweise ist die Anordnungseinrichtung ausgelegt, eine Öffnung der Lochblende, das Brillenglas und die bildformende Einrichtung entlang einer Anordnungsachse, insbesondere entlang der optischen Achse des Brillenglases zu positionieren.

Weiterhin vorzugsweise schneidet die optische Achse des Brillenglases das abzubildende Objekt, die Öffnung der Lochblende und die bildformende Einrichtung, wobei die optische Achse vorzugsweise einen Mittelpunkt der Öffnung der Lochblende schneidet. Die optische Achse ist hierbei eine Gerade, die auf beiden optischen Flächen des Brillenglases im wesentlichen senkrecht steht und entlang welcher Licht das Brillenglas unabgelenkt durchdringt.

Die optische Achse sowie weitere verwendete Fachbegriffe entsprechen im wesentlichen den Definitionen, wie sie in einschlägigen Normen wie beispielsweise der DIN EN ISO 8624, der DIN 58208, DIN EN ISO 13666, der DIN 5340 und der DIN EN ISO 8980-2 angegeben sind. Ferner wird bei den verwendeten Fachbegriffen zusätzlich zu den genannten Normen weiterhin auf Definitionen in dem Fachbuch "Die Optik des Auges und der Sehhilfen" von Dr. Roland Enders, 1995 Optische Fachveröffentlichungen GmbH, Heidelberg, sowie in dem Fachbuch "Optik und Technik der Brille" von Heinz Diepes und Ralf Blendowksi, 2002 Verlag Optische Fachveröffentlichung GmbH, Heidelberg, verwiesen. Die Normen sowie die genannten Bücher stellen für die Begriffsdefinitionen insoweit einen integralen Offenbarungbestandteil der vorliegenden Beschreibung der Erfindung dar.

Die optische Achse kann insbesondere die optische Achse bezüglich lediglich einer Fläche des Brillenglases sein. Das Brillenglas kann beispielsweise eine progressive Fläche und eine sphärische Fläche umfassen. In diesem Fall ist die optische Achse vorzugsweise die optische Achse der sphärischen Fläche.

Die Anordnungsachse kann auch eine Gerade sein, welche durch einen geometrischen Mittelpunkt und ein Zentrum der Öffnung der Lochblende festgelegt ist. Insbesondere kann die Anordnungsachse das Brillenglas in dem geometrischen Mittelpunkt und die Öffnung der Lochblende in dem Zentrum der Lochblende schneiden. Ferner kann die Anordnungsachse die bildformende Einrichtung schneiden.

Die Anordnungsachse kann auch einer Nullblickrichtung in Gebrauchsstellung des Brillenglases im System Brille-Kopf eines Brillenträgers entsprechen. Die Lochblende ist im wesentlichen derart angeordnet, daß die Position des Zentrums der Öffnung der Lochblende relativ zu dem Brillenglas im wesentlichen dem Augendrehpunkt oder der Position des Apex der Hornhaut des Brillenträgers relativ zu dem Brillenglas entspricht, bzw. damit im wesentlichen identisch ist und die Anordnungsachse gleich der Nullblickrichtung des Brillenträgers angeordnet ist.

Gemäß einer typischen Gebrauchsstellung beträgt der Augendrehpunktsabstand beispielsweise etwa 24,7; 27,9; 28,5; 28,8 mm, die Vorneigung (pantoskopischer Winkel) etwa 8°, der Fassungsscheibenwinkel etwa 0°, die Pupillendistanz etwa 63 mm, der Hornhautscheitelabstand etwa 15 mm. Die Objektentfernung im Fernbezugspunkt BF ist etwa 0 dpt und die Objektentfernung im Nahbezugspunkt BN ist etwa -2,5 dpt. Eine weitere typische Gebrauchsstellung ist bei den sogenannten Sportbrillen gegeben. Hier betragen die Fassungsscheibenwinkel maximal etwa 20°.

Die Anordnungsachse kann aber auch eine Gerade sein, welche durch das Zentrum der Öffnung der Lochblende und den Zentrierpunkt, den optischen Mittelpunkt, den Fernbezugspunkt, den Nahbezugspunkt oder einen anderen charakteristischen Punkt des Brillenglases bestimmt ist.

Weiterhin vorzugsweise ist die Lochblende derart ausgelegt, daß die folgende Bedingung gilt:

$$D < \sqrt{\frac{2\lambda ab}{a+b}},$$

wobei

$D$     der Durchmesser der Lochblende,

$a$     der Abstand des Brillenglases von der Lochblende,

$b$     der Abstand der bildformenden Einrichtung von der Lochblende und

$\lambda$     die Wellenlänge des eingestrahlten Lichts ist und

wobei ferner gilt:

$$\lambda \geq 400nm, \text{ insbesondere } \lambda \approx 546nm.$$

Der Abstand a des Brillenglases von der Lochblende ist beispielsweise der Abstand des Zentrums der Öffnung der Lochblende von einem charakteristischen Punkt des Brillenglases, wie beispielsweise dem Scheitelpunkt, dem geometrischen Mittelpunkt, dem optischen Mittelpunkt, dem Fernbezugspunkt, dem Nahbezugspunkt oder dem Zentrierpunkt. Der Abstand a des Brillenglases von der Lochblende kann aber auch bezüglich einer Hauptebene des Brillenglases bestimmt sein. Insbesondere ist der Abstand a des Brillenglases von der Lochblende die Distanz zwischen dem Zentrum der Öffnung der Lochblende und dem Schnittpunkt der oben beschriebenen Anordnungsachse mit entweder der der Lochblende zugewandten Fläche des Brillenglases oder der der Lochblende abgewandten Fläche des Brillenglases.

Der Abstand b der bildformenden Einrichtung von der Lochblende ist beispielsweise Distanz des Zentrums der Öffnung der Lochblende von einer Fläche bzw. einer Oberfläche der bildformenden Einrichtung. Die Wellenlänge λ des eingestrahlten Lichts liegt vorzugsweise im optisch sichtbaren Bereich, d.h. zwischen etwa 400 nm und etwa 700 nm.

Vorzugsweise weist die Lochblende ein optisches Element oder mehrere der optischen Elemente wie Planplatten, Prismen oder Linsen aufweist.

Vorzugsweise weist die Lochblende einen Öffnungswinkel von etwa 70° auf. In anderen Worten werden alle Strahlen in einem Kegel, dessen Kegelspitze mit dem Zentrum der Öffnung der Lochblende identisch ist und dessen Öffnungswinkel 70° beträgt, durch die Öffnung der Lochblende hindurch treten und auf die bildformende Einrichtung abgebildet. Dies entspricht etwa einem Blickwinkel von 35° beim Auge, wodurch das Meßfeld vorteilhafterweise groß genug ist, um einen tatsächlichen Verzeichnungseindruck des Brillenträgers wiederzugeben.

Bevorzugt ist die Anordnungseinrichtung ausgelegt, das Brillenglas und die Lochblende derart anzuordnen, daß ein Abstand zwischen dem Scheitelpunkt der der Lochblende zugewandten Fläche des Brillenglases von dem Zentrum der Öffnung der Lochblende mit einem bestimmten Pupillenabstand des Benutzers des Brillenglases in Gebrauchsstellung im wesentlichen identisch ist.

Vorteilhafterweise entspricht daher die bevorzugte Anordnung des Brillenglases relativ zu der Lochblende der Gebrauchsstellung des Brillenglases im System aus Brille und Kopf des Benutzers des Brillenglases, d.h. des Brillenträgers. Der Abstand zwischen dem Brillenglas und der Lochblende und der dahinter angeordneten bildformenden Einrichtung ist daher vorgegeben. Eine Veränderung der Verzeichnungsbilder bzw. der Verzeichnung durch Änderung dieses Abstands, wie dies beispielsweise bei manueller Betrachtung des Brillenglases möglich ist, wird vorteilhafterweise vermieden. Insbesondere kann der Verzeichniseindruck des Brillenträgers identisch, d.h. ohne zusätzliche Aberrationen beispielsweise aufgrund von Kameraobjektiven oder veränderten Abständen, wiedergegeben werden.

Vorteilhafterweise ist die erfindungsgemäße Vorrichtung auch derart kompakt, daß sie sich problemlos transportieren und in realer Gebrauchsumgebung einsetzen läßt. Weiterhin vorteilhafterweise ist die erfindungsgemäße Vorrichtung zur direkten Verzeichnisprüfung von Brillengläsern in Gebrauchsstellung und/oder zur Demonstration der sogenannten Schaukeleffekte bei Gleitsichtgläsern ausgelegt.

Bevorzugt ist die Anordnungseinrichtung ausgelegt, das Brillenglas und die Lochblende derart anzuordnen, daß ein Abstand zwischen dem Scheitelpunkt des Brillenglases der der Lochblende zugewandten Fläche des Brillenglases von dem Zentrum der Öffnung der Lochblende mit einem bestimmten Abstand des augenseitigen Scheitelpunktes des Brillenglases von einer Pupille bzw. Eintrittspupille des Auges des Benutzers des Brillenglases in Gebrauchsstellung im wesentlichen identisch ist.

Weiterhin vorzugsweise ist die Anordnungseinrichtung derart ausgelegt, daß der Abstand zwischen dem Scheitelpunkt des Brillenglases der der Lochblende zugewandten Fläche des Brillenglases und dem Zentrum der Öffnung der Lochblende zwischen etwa 8 mm und etwa 33 mm bevorzugt zwischen etwa 10 mm und etwa 30 mm ist. Größere Werte sind bei sogenannten Lesebrillen, die auf der Nasenspitze aufliegen, mit größerem Hornhautscheitelabstand und damit Pupillenabstand zu finden, d.h. der Abstand zwischen dem Scheitelpunkt des Brillenglases der der Lochblende zugewandten Fläche des Brillenglases und dem Zentrum der Öffnung der Lochblende kann bei Lesebrillen größere Werte aufweisen.

Bevorzugt ist die Anordnungseinrichtung ausgelegt, das Brillenglas und die Lochblende derart anzuordnen, daß ein Abstand zwischen dem Scheitelpunkt des Brillenglases der der Lochblende zugewandten Fläche des Brillenglases von dem Zentrum der Öffnung der Lochblende mit einem bestimmten Abstand des augenseitigen Scheitelpunktes des Brillenglases von dem Augendrehpunkt des Auges des Benutzers des Brillenglases in Gebrauchsstellung im wesentlichen identisch ist.

Besonders bevorzugt ist die Anordnungseinrichtung derart ausgelegt, daß der Abstand zwischen dem Scheitelpunkt des Brillenglases der der Lochblende zugewandten Fläche des Brillenglases und dem Zentrum der Öffnung der Lochblende zwischen etwa 16 mm und etwa 46 mm vorzugsweise zwischen etwa 21 mm und etwa 41 mm ist.

Sollte die der Lochblende zugewandte Fläche des Brillenglases keinen Scheitelpunkt aufweisen, kann auch der Scheitelpunkt der der Lochblende abgewandten Fläche verwendet werden und zur Abstandsbestimmung der Schnittpunkt der optischen Achse des Brillenglases mit der der Lochblende zugewandten Fläche benutzt werden. Alternativ kann auch ein beliebiger anderer charakteristischer Punkt des Brillenglases verwendet werden, beispielsweise der geometrische Mittelpunkt der der Lochblende zugewandten Fläche des Brillenglases, der Nahbezugspunkt, der Fernbezugspunkt, der optische Mittelpunkt, der Zentrierpunkt, usw., solange die Anordnung des Brillenglases relativ zu der Lochblende der Gebrauchsstellung des Brillenglases vor dem Auge entspricht, wobei das Zentrum der Öffnung der Lochblende im wesentlichen mit dem Apex der Hornhaut oder dem Augendrehpunkt zusammenfällt.

In anderen Worten ist die Lochblende bzw. das Zentrum der Öffnung der Lochblende an den jeweiligen Perspektivitätszentren für das blickende oder für das ruhende Auge angeordnet. Perspektivitätszentren sind die Orte der Schnittpunkte aller bildseitigen Sehstrahlen. Die bildseitigen Sehstrahlen für das blickende Auge schneiden sich im Augendrehpunkt. Die bildseitigen Sehstrahlen für das ruhende Auge schneiden sich in der Mitte der Eintrittspupille, d.h. etwa 3 mm hinter dem Hornhautscheitel.

Weiterhin vorzugsweise ist die Anordnungseinrichtung derart ausgelegt, daß die Lochblende relativ zu dem Brillenglas bewegbar ist.

Beispielsweise kann die Lochblende relativ zu dem Brillenglas verschiebbar angeordnet sein, d.h. das Brillenglas und die Lochblende können entlang der oben beschriebenen Anordnungsachse durch Schienenelemente miteinander verbunden sein, wobei das Brillenglas und/oder die Lochblende entlang der Schienenelemente verschiebbar angeordnet sind. Die Lochblende kann ferner relativ zu dem Brillenglas drehbar bzw. verschwenkbar angeordnet sein und umgekehrt. In anderen Worten kann bei ortsfester Lochblende das Brillenglas bewegt, insbesondere verschoben bzw. verschwenkt werden oder bei ortsfestem Brillenglas die Lochblende bewegt, insbesondere verschoben bzw. verschwenkt werden. Wird beispielsweise das Brillenglas bewegt, ist vorzugsweise das abzubildende Objekt mit dem Brillenglas bewegbar. Wird beispielsweise die Lochblende bewegt, ist vorzugsweise die bildformende Einrichtung mit der Lochblende bewegbar.

Weiterhin vorzugsweise ist die Anordnungseinrichtung zu einer derartigen Positionierung der Lochblende und/oder des Brillenglases ausgelegt, daß eine Achse der Lochblende, insbesondere eine Normalenachse der Lochblende, welche im wesentlichen das Zentrum der Öffnung der Lochblende schneidet und zu einer dem Brillenglas zugewandten Fläche der Lochblende im wesentlichen senkrecht ist, insbesondere die optische Achse des Brillenglases in einem vorbestimmten Schnittpunkt unter einem vorbestimmten Schnittwinkel schneidet.

Besonders bevorzugt ist die Anordnungseinrichtung ausgelegt, daß der Schnittwinkel zwischen der Achse der Lochblende und der Achse des Brillenglases bei im wesentlichen konstantem Schnittpunkt veränderbar ist.

Insbesondere ist die Anordnungseinrichtung ausgelegt, daß das Brillenglas und die Lochblende derart anordenbar sind, daß sowohl die Achse des Brillenglases als auch die Achse der Lochblende mit der oben beschriebenen Anordnungsachse übereinstimmen. Ferner liegt vorzugsweise der Schnittpunkt ebenfalls auf der Anordnungsachse. In anderen Worten ist die Anordnungseinrichtung ausgelegt, daß bei fest positioniertem Brillenglas die Lochblende um den Schnittpunkt relativ zu dem Brillenglas verschwenkbar bzw. drehbar ist. Insbesondere ist die bildformende Einrichtung mit der Lochblende um den Schnittpunkt verschwenkbar. Alternativ kann auch bei fester Lochblende das Brillenglas um den Schnittpunkt relativ zu der Lochblende verschwenkbar bzw. drehbar sein. Die Achse der Lochblende und die Achse des Brillenglases stimmen in diesem Fall nicht mehr überein. Anders ausgedrückt, sind die Achse der Lochblende, die Achse des Brillenglases und die Anordnungsachse im wesentlichen parallel oder sogar identisch, wenn der Schnittwinkel gleich 180° ist. Wird das Brillenglas relativ zu der Lochblende bzw. die Lochblende relativ zu dem Brillenglas gedreht bzw. verschwenkt, weicht der Schnittwinkel von 180° ab.

Besonders bevorzugt ist der Schnittpunkt im wesentlichen mit dem Zentrum der Öffnung der Lochblende identisch, d.h. die Lochblende wird relativ zu dem Brillenglas um das Zentrum der Öffnung der Lochblende gedreht. Vorteilhafterweise kann dadurch die Verzeichnung des Brillenglases entsprechend verschiedener Blickwinkel visualisiert und/oder bestimmt werden.

Weiterhin vorzugsweise ist die Anordnungseinrichtung ausgelegt, daß die Lochblende im wesentlichen senkrecht zu der Anordnungsachse verschiebbar ist. Vorteilhafterweise kann somit die Verzeichnung für verschiedene Abschnitte des Brillenglases visualisiert und/oder bestimmt werden.

Weiterhin kann die Anordnungseinrichtung als Ganzes verschoben oder verschwenkt werden. Damit simuliert man die Kopfbewegung bei einem Brillenträger. Damit wird gleichzeitig ein größerer Objektraum erfaßt, als bei den reinen Blickbewegungen.

Weiterhin kann die Anordnungseinrichtung kombinierte Blick- und Kopfbewegungen nachstellen.

Ferner umfaßt die erfindungsgemäße Vorrichtung weiterhin vorzugsweise eine elektronische Datenverarbeitungsanlage zum Auswerten von Bilddaten der bildformenden Einrichtung. Der Sensorchip, beispielsweise ein CCD-Chip, kann mit der elektronischen Datenverarbeitungsanlage, beispielsweise einem Computer, verbunden sein, wobei ferner eine Ausgabeeinrichtung, wie beispielsweise ein Monitor und/oder ein Drucker mit dem Computer verbunden sind. Es ist möglich, die von dem Sensorchip erfaßte Abbildung des Objekts auszugeben bzw. lediglich die Verzeichnung visuell und/oder als Verzeichnungswerte auszugeben.

Ferner kann die bildformende Einrichtung, beispielsweise der CCD-Chip, beim Verschwenken des Brillenglases relativ zu der Lochblende ausgelegt sein, konsekutiv Bilddaten des abgebildeten Objekts zu erzeugen und an den Computer weiter zu leiten. Mit Hilfe des Computers ist es möglich Schaukeleffekte eines progressiven Brillenglases darzustellen. Die bildformende Einrichtung kann auch ausgelegt sein, insbesondere in Verbindung mit dem Computer, anstelle oder zusätzlich zu den Einzelbildern, während der Bewegung bzw. des Verschwenkens des Brillenglases relativ zu der Lochblende bzw. eines Drehens der Lochblende um das Zentrum der Öffnung der Lochblende, Filmdaten zu erzeugen, wodurch Schaukeleffekte eines progressiven Brillenglases darstellbar sind.

Weiterhin vorzugsweise weist die Vorrichtung das abzubildende Objekt und/oder die bildformende Einrichtung auf. In anderen Worten kann die Vorrichtung das Brillenglas und die Lochblende halten und ferner die bildformende Einrichtung und/oder das abzubildende Objekt halten.

Weiterhin kann die Anordnungseinrichtung frontal zu einem abzubildenden externen Objekt betrieben werden. So daß die mobile Anordnungseinrichtung in einem realen Objektraum, z.B. einem Bildschirmarbeitsplatz plaziert werden kann.

Die bildformende Einrichtung kann beispielsweise eine Mattscheibe, einen Photofilm und/oder einen elektronischen Sensorchip aufweisen. Die bildformende Einrichtung kann auch eine Linse aufweisen bzw. eine Vielzahl von Mattscheibe, Photofilm und/oder elektronischem Sensorchip, wobei beispielsweise mittels eines Strahlteilers diese Einrichtungen zeitgleich verwendet werden können.

Ein weiterer Aspekt der vorliegenden Erfindung umfaßt ein Verfahren zum Visualisieren und/oder Bestimmen einer Verzeichnung eines Brillenglases mit den Schritten:

- Bereitstellen eines abzubildenden Objekts, eines Brillenglases, einer Lochblende und einer bildformenden Einrichtung, wobei ein Abstand zwischen einem Scheitelpunkt des Brillenglases einer der Lochblende zugewandten Fläche des Brillenglases von einem Zentrum einer Öffnung der Lochblende mit einem bestimmten Hornhautscheitelabstand oder mit einem bestimmten Abstand des Scheitelpunktes der augenseitigen Fläche des Brillenglases von dem Augendrehpunkt des Auges eines Benutzers des Brillenglases in Gebrauchsstellung im wesentlichen identisch ist und

- Abbilden des Objekts mittels des Brillenglases und der Lochblende auf die bildformende Einrichtung.

Hinsichtlich der Definitionen des Scheitelpunktes, des Hornhautscheitelabstandes und des Abstandes des Scheitelpunktes der augenseitigen Fläche des Brillenglases von dem Augendrehpunkt wird auf die obigen Ausführungen verwiesen.

Vorzugsweise umfaßt das Verfahren den weiteren Schritt:

Analysieren einer Abbildung des Objekts anhand einer Analyseeinrichtung.

Zum Analysieren der Abbildung kann beispielsweise die Abbildung an einem Computermonitor oder einer Mattscheibe dargestellt werden. Ferner können die verzeichneten Abbildungen bzw. Abbildungsdaten mittels des elektronischen Sensorchips an eine datenverarbeitende Einrichtung, wie beispielsweise einen Computer, übergeben werden und von diesem ausgewertet werden, wobei insbesondere die Verzeichnung anhand herkömmlicher Verfahren berechnet und ausgegeben werden kann.

Ein weitere Aspekt der vorliegenden Erfindung betrifft die Verwendung einer erfindungsgemäßen Vorrichtung zum Visualisieren und/oder Bestimmen der Verzeichnung eines Brillenglases. In anderen Worten betrifft dieser Aspekt der Erfindung die Verwendung der Vorrichtung zum Visualisieren und/oder Bestimmen einer Verzeichnung eines Brillenglases mit

- einer Anordnungseinrichtung und
- einer Lochblende, wobei

die Anordnungseinrichtung ausgelegt ist,

- ein abzubildendes Objekt,
- ein Brillenglas,
- die Lochblende und
- eine bildformende Einrichtung

entsprechend einer vorbestimmten bzw. vorbestimmbaren Position derart zu positionieren, daß das Objekt anhand des Brillenglases und der Lochblende auf die bildformende Einrichtung abbildbar ist.

Vorzugsweise werden bei der Verwendung die Öffnung der Lochblende, das Brillenglas und die bildformende Einrichtung entlang einer Anordnungsachse, insbesondere entlang der optischen Achse des Brillenglases positioniert.

Besonders bevorzugt werden bei der Verwendung der Vorrichtung das Brillenglas und die Lochblende entsprechend einer Gebrauchsstellung des Benutzers des Brillenglases angeordnet, d.h. der Abstand zwischen dem Scheitelpunkt des Brillenglases und dem Zentrum der Lochblende entspricht im wesentlichen der Pupillenabstand des Benutzers des Brillenglases, d.h. dem Abstand zwischen hinterem bzw. dem augseitigen Glasscheitel und der Eintrittspupille oder dem Abstand des Scheitelpunktes mit dem Augendrehpunkt des Benutzers des Brillenglases in Gebrauchsstellung des Brillenglases.

Die Gebrauchsstellung des Brillenglases ist hierbei vorab individuell angepaßt und die Vorrichtung wird verwendet, um in der Gebrauchsstellung des Brillenglases die von dem Brillenträger wahrgenommene Verzeichnung des Brillenglases zu visualisieren und/oder zu bestimmen.

Vorzugsweise werden bei der Verwendung das Brillenglas und die Lochblende derart angeordnet, daß ein Abstand zwischen dem Scheitelpunkt des Brillenglases einer der Lochblende zugewandten Fläche des Brillenglases von dem Zentrum der Öffnung der Lochblende mit einer bestimmten, insbesondere der Pupillenabstand des Benutzers des Brillenglases (d.h. dem Abstand zwischen hinterem bzw. dem augseitigen Glasscheitel und der Eintrittspupille) in Gebrauchsstellung im wesentlichen identisch ist.

Besonders bevorzugt werden bei der Verwendung der Vorrichtung das Brillenglas und die Lochblende derart angeordnet, daß ein Abstand zwischen dem Scheitelpunkt des Brillenglases einer der Lochblende zugewandten Fläche des Brillenglases von dem Zentrum der Öffnung der Lochblende mit einem bestimmten, insbesondere verordneten Abstand zwischen dem Scheitelpunkt des Brillenglases und dem Augendrehpunkt des Benutzers in Gebrauchsstellung des Brillenglases im wesentlichen identisch ist.

Vorteilhafterweise kann daher die Verzeichnung für alle Blick- oder Gesichtsfeldwinkel gleichzeitig, insbesondere vorteilhafterweise in Echtzeit durchgeführt werden, wobei aufwendige Bewegungsmechanismen vermieden werden.

Nachfolgend wird die Erfindung beispielhaft anhand begleitender Zeichnungen bevorzugter Ausführungsform beschrieben. Es zeigt

Figur 1: Eine schematische Schnittansicht eines Brillenglases in Gebrauchsstellung vor einem Auge eines Benutzers;

Figur 2: eine schematische Schnittansicht einer bevorzugten Vorrichtung;

Figur 3: eine weitere schematische Schnittansicht ähnlich zu Figur 2;

Figur 4: eine weiter schematische Schnittansicht eines Brillenglases in Gebrauchsstellung vor einem Auge eines Benutzers.

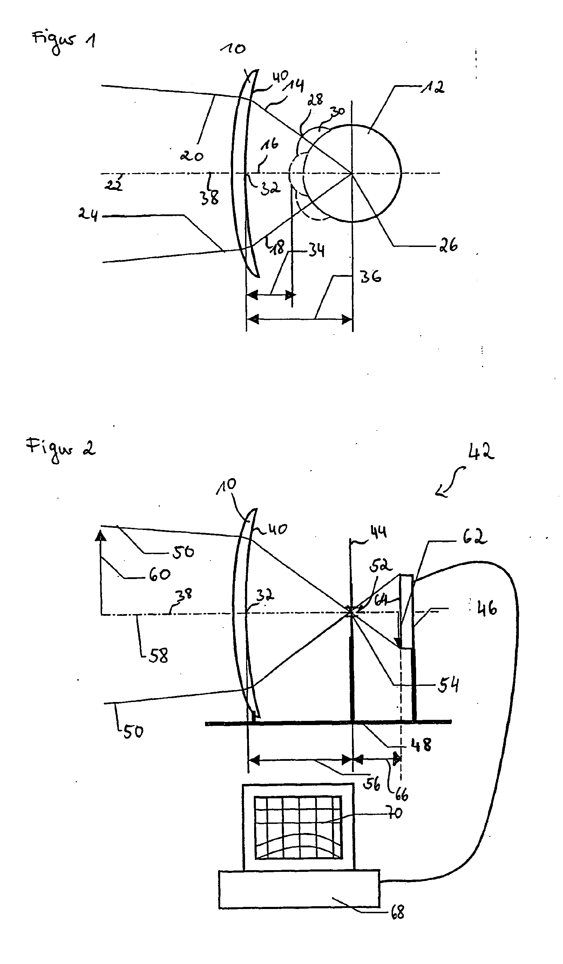

**Figur 1** zeigt eine schematische Schnittansicht eines Brillenglases 10 in Gebrauchsstellung vor einem blikkenden Auge 12 eines Benutzers des Brillenglases 10, d.h. des Brillenträgers (nicht gezeigt). In anderen Worten entspricht die Darstellung einer Blickfelddarstellung. Das Auge 12 ist hierbei entsprechend dreier Blickrichtungen 14, 16, 18 eingezeichnet, wobei die Blickrichtung nach oben 14 anhand einer durchgezogenen Linie, die Blickrichtung nach vorne 16 anhand einer Strich-punktierten Linie und die Blickrichtung nach unten 18 anhand einer durchgezogenen Linie dargestellt ist. Die Blickrichtungen nach oben 14, nach vorne 16 und nach unten 18 sind relativ zu dem Bezugssystem Erde bezeichnet. In anderen Worten entspricht die Blickrichtung nach vorne 16 im wesentlichen einer horizontalen Richtung im Bezugssystem Erde. Ferner ist auch der Strahlengang entlang der jeweiligen Blickrichtungen nach Durchgang durch das Brillenglas 10 anhand der Linien 20, 22 und 24 dargestellt. Weiterhin ist in Figur 1 ein Augendrehpunkt 26 und ein Apex 28 einer Hornhaut 30 dargestellt. Entsprechend der Blickrichtungen 14, 16, 18 ist die Hornhaut 30 an verschiedenen Positionen dargestellt. Für die Blickrichtung nach oben 14 ist die Hornhaut 30 mittels einer durchgezogenen Linie dargestellt. Für die Blickrichtungen nach vorne 16 und nach unten 18 ist die Hornhaut jeweils mittels einer unterbrochenen Linie dargestellt.

Ferner zeigt Figur 1 einen Scheitelpunkt 32 des Brillenglases 10 sowie einen Abstand 34 des Scheitelpunkts 32 von dem Apex 28 der Hornhaut 30 in der Blickrichtung nach vorne 16. Der Abstand 34 wird auch als Hornhautscheitelabstand 34 in Gebrauchsstellung bezeichnet. Ebenso ist in Figur 1 der Abstand 36 des Scheitelpunktes 32 von dem Augendrehpunkt 26 dargestellt. Ferner entspricht für das in Figur 1 gezeigte Brillenglas 10 die Blickrichtung nach vorne 16 einer optischen Achse 38 des Brillenglases 10. Der Scheitelpunkt 32 ist regelmäßig der Schnittpunkt der optischen Achse 38 mit einer der Flächen 40 des Brillenglases 10.

Die Position des Augendrehpunkts 26 entspricht einem Perspektivitätszentrum des blickenden Auges 12. Das Perspektivitätszentrum 36 für das blickende Auge 12 wird charakterisiert durch den Hornhautscheitelabstand 34 und durch eine Baulänge des Auges 12, so daß sich der Augendrehpunktsabstand 36 als Weglänge vom Scheitelpunkt 32 der hinteren, d.h. der augseitigen Fläche 40 des Brillenglases 10 zum Augendrehpunkt 26 des Auges 12 ergibt.

In **Figur 2** ist eine bevorzugte Ausführungsform einer Vorrichtung 42 zum Visualisieren und/oder Bestimmen einer Verzeichnung des Brillenglases 10 dargestellt. Das Brillenglas 10, sowie eine Lochblende 44 und eine bildformende Einrichtung 46 in Form eines CCD-Chips 46 werden von einer Haltevorrichtung 48 gehalten. Die Lochblende 44 ist eine dünne Platte mit zwei im wesentlichen planen Flächen, welche im wesentlichen parallel zueinander sind. Ferner ist in Figur 2 ein Strahlengang 50 des Brillenglases 10 eingezeichnet, wobei der Strahlengang 50 einer Feldbegrenzung des sehenden oder ruhenden Auges 12 entspricht. Die Feldbegrenzung ist in Figur 1 beispielsweise durch die Blickrichtung nach oben 14 und die Blickrichtung nach unten 18 und den entsprechenden Strahlengang 20 bzw. 24 dargestellt. Ferner ist in Figur 2 eine Öffnung 52 der Lochblende 44 dargestellt und insbesondere das Zentrum 54 der Öffnung 52 der Lochblende 44. Die Öffnung 52 hat im Querschnitt ein im wesentlichen kreisförmige Konfiguration. Aufgrund der räumlichen Ausdehnung der Lochblende 44 hat die Öffnung 52 im dreidimensionalen Raum im wesentlichen Zylinderform, wobei die Zylinderhöhe gleich der Dicke der plattenförmigen Lochblende 44 ist. Das Zentrum 54 ist im wesentlichen positionsgleich mit den jeweiligen Perspektivitätszentren der Linse 10. In anderen Worten entspricht ein Abstand 56 des Zentrums 54 der Lochblende 44 von dem Scheitelpunkt 32 im wesentlichen dem Abstand 36 des Scheitelpunktes 32 von dem Augendrehpunkt 26 des Auges 12, wie in Figur 1 gezeigt. Folglich dient die Vorrichtung gemäß Figur 2 zur Bestimmung bzw. Detektion bzw. Darstellung der Verzeichnung des Blickfelds des Brillenträgers.

Gemäß einer weiteren bevorzugten Ausführungsform ist der Abstand 56 der Lochblende 44 von dem Scheitelpunkt 32 im wesentlichen dem Abstand 82 (gezeigt in Figur 4) des Scheitelpunktes 32 von der Eintrittspupille 84 (gezeigt in Figur 4) des Auges 12. Die Vorrichtung gemäß dieser Ausführung dient der Bestimmung bzw. Detektion bzw. Darstellung der Verzeichnung des Gesichtsfelds des Brillenträgers.

Weiterhin ist in Figur 2 eine Anordnungsachse 58 dargestellt. Die Anordnungsachse 58 wird durch den Scheitelpunkt 32 des Brillenglases 10 und das Zentrum 54 der Lochblende 44 bestimmt. Die Anordnungsachse 58 im System Brillenglas 10 und Lochblende 44 ist im wesentlichen identisch positioniert wie die optische Achse 38 der Figur 1 im System Brillenglas 10 und Auge 12. Insbesondere entspricht die Lage der Anordnungsachse 58 im wesentlichen einer Nullblickrichtung im System aus Brillenglas 10 und Auge 12 eines Brillenträgers. Hierbei ist die Position des Augendrehpunkts 26 relativ zu dem Brillenglas 10 im System aus Brillenglas 10 und Auge 12 des Brillenträgers gleich der Position des Zentrums 54 der Lochblende 44 relativ zu dem Brillenglas 10 im System aus Brille 10 und Lochblende 44 der bevorzugten erfindungsgemäßen Vorrichtung 42. In anderen Worten wird die Lochblende 44 relativ zu dem Brillenglas 10 entsprechend der Gebrauchsstellung des Brillenglases 10 zu dem Auge 12 angeordnet, wobei das Zentrum 54 der Öffnung 52 der Lochblende 44 dem Augendrehpunkt 26 entspricht.

Wie weiter in Figur 2 dargestellt, ist die optische Achse 38 des Brillenglases identisch mit der Anordnungsachse 58. Die Anordnungsachse 58 schneidet die hintere Fläche 40 des Brillenglases 10, d.h. die der Lochblende 44 zugewandte Seite 40 des Brillenglases 10 in dem Scheitelpunkt 32. Die hintere Fläche 40 des Brillenglases 10 kann beispielsweise eine progressive Fläche sein, welcher keine optische Achse zuordenbar ist und die daher auch keinen Scheitelpunkt aufweisen muß. In diesem Fall gilt als Scheitelpunkt der Schnittpunkt des Anordnungsachse 58 mit einer Fläche, bevorzugt der hinteren Fläche 40 des Brillenglases 10. Die Anordnungsachse 58 kann das Brillenglas 10 auch in einem beliebigen anderen Punkt, beispielsweise in dem geometrischen Mittelpunkt (nicht gezeigt) dem Nahbezugspunkt (nicht gezeigt), dem Fernbezugspunkt (nicht gezeigt), dem optischen Mittelpunkt (nicht gezeigt), dem Zentrierpunkt (nicht gezeigt), usw. schneiden.

Ferner ist in Figur 2 ein abzubildendes Objekt 60 im Form eines Pfeils 60 dargestellt. Der Pfeil 60 wird anhand des Brillenglases 10 und der Lochblende 44 als abgebildeter Pfeil 62 auf dem CCD-Chip 46 abgebildet. Der abgebildete Pfeil 62 wird insbesondere auf einer der Lochblende 44 zugeordneten Fläche 64 des CCD-Chips 46 abgebildet. Anstelle des CCD-Chips 46 kann auch eine Mattscheibe (nicht gezeigt) angeordnet werden. Ferner kann der Pfeil 60 auch von der Haltevorrichtung 48 gehalten werden. In Figur 2 ist weiterhin ein Abstand 66 des abgebildeten Pfeils 62 von dem Zentrum 54 der Lochblende 44 dargestellt.

Der CCD-Chip 46 kann mit einer Analyseeinrichtung 68, insbesondere einem Computer 68 und einer Ausgabeeinrichtung 70, insbesondere einem Monitor 70 verbunden sein. Anhand des Monitors 70 kann die Verzeichnung dargestellt werden. Beispielsweise wird in Figur 2 schematisch dargestellt, wie ein Objekt in Form eines Strichgitters verzeichnet aussehen kann. Ferner kann auf dem Monitor 70 aber auch die Verzeichnung, wie sie beispielsweise anhand des Computers 68 in absoluten Größen berechenbar ist, dargestellt werden.

Das Brillenglas 10 kann ein Einstärken- oder ein Mehrstärkenbrillenglas sein. Insbesondere kann das Brillenglas 10 ein progressives Brillenglas mit einer oder zwei progressiven Flächen sein.

Weiterhin genügt die Lochblende 44 der Bedingung

$$D < \sqrt{\frac{2\lambda ab}{a+b}},$$

wobei

$D$    der Durchmesser der Lochblende 44,

$a$    der Abstand des Brillenglases von der Lochblende 44,

$b$    der Abstand des CCD-Chips 46 von der Lochblende 44 und

$\lambda$    die Wellenlänge des eingestrahlten Lichts ist und

wobei ferner gilt:

$$\lambda \geq 400nm \text{, insbesondere } \lambda \approx 546nm \text{.}$$

Hierbei entspricht die Objektweite a dem im wesentlichen Abstand 56 und die Bildweite b im wesentlichen dem Abstand 66. Der Durchmesser D der Öffnung 52 der Lochblende 44 genügt hierbei insbesondere den oben genannten Bedingungen für eine Wellenlänge von λ ungefähr gleich 546 nm und somit auch für alle weiteren Wellenlängen des optisch sichtbaren Bereiches von etwa 400 nm bis etwa 700 nm.

Ein Durchmesser der Öffnung 52 der Lochblende 44 kann zwischen etwa 0,1 mm bis etwa 0,3 mm betragen.

Es ist nicht notwendig, daß die optische Achse 38 und der Strahlengang 22 eine identische Lage und/oder eine identische Richtung, wie in Figur 2 dargestellt, aufweisen.

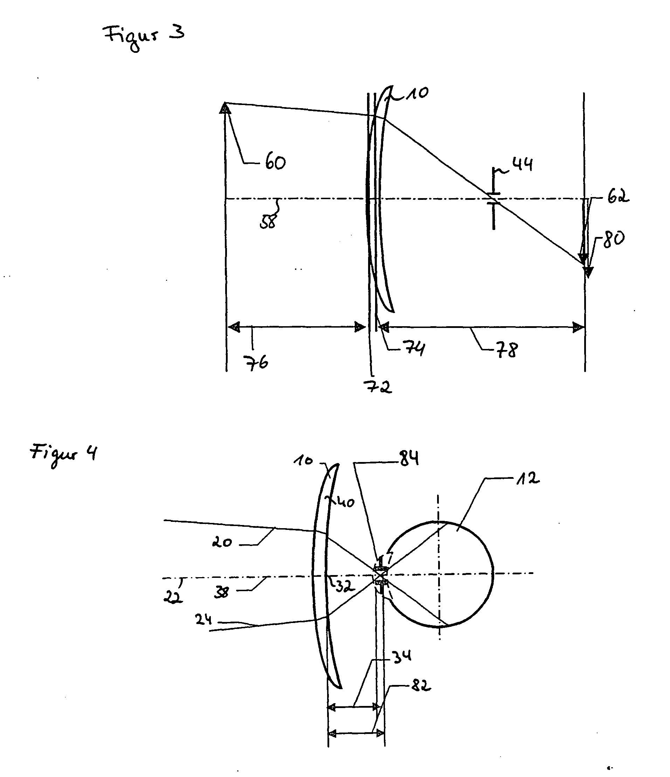

Figur 3 zeigt eine schematische Schnittansicht des Pfeils 60, des Brillenglases 10, der Lochblende 44 und des abgebildeten Pfeils 62, zur Bestimmung der Verzeichnung des Brillenglases 10, wobei das Brillenglas 10 und die Lochblende 44 entsprechend Figur 2 relativ zu der Anordnungsachse 58 angeordnet sind. Ferner sind in Figur 3 zwei Hauptebenen 72, 74 des Brillenglases, eine Objektweite 76 sowie eine Bildweite 78 des Brillenglases 10 eingezeichnet. Anhand der Gullstrandformeln kann aufgrund der Größe des Pfeils 60, der Objektweite 76 und der Bildweite 78, unter Kenntnis der Hauptebene 72, 74 die paraxiale Größe des abgebildeten Pfeils 62 berechnet werden. Die tatsächliche trigonometrische Größe des abgebildeten Pfeils 62 kann beispielsweise anhand des CCD-Chips 46 (gezeigt in Figur 2) gemessen werden. In Figur 3 sind sowohl der tatsächliche trigonometrische Pfeil 62 als auch der berechnete paraxiale Pfeil 80 dargestellt. Die Vergrößerung $V_{i,j}$ entspricht dem Verhältnis der Größe des trigonometrischen Pfeiles 62 zu der Größe des paraxialen Pfeiles 80, wie vorgehend ausgeführt.

Die Gullstrandformeln beschreiben die ideale optische Abbildung durch Linsen. Sie gelten für das paraxiale Gebiet. Die paraxiale Größe des Pfeils errechnet sich demnach zu

$$Y' = Y' * a/b,$$

wobei
Y' die paraxiale Größe des Pfeils 80,
Y die reale Größe des Pfeils 60,
a der Objektabstand 76 und
b der Bildabstand 78 ist.

Alternativ zu der in Figur 2 dargestellten Positionierung des. Brillenglases 10 relativ zu der Lochblende 44 kann auch ein anderer Abstand zwischen dem Brillenglas 10 und der Lochblende 44 gewählt werden. Insbesondere ist es möglich, daß der Abstand des Zentrums 54 der Öffnung 52 der Lochblende 44 von dem Scheitelpunkt 32 des Brillenglases gleich dem Hornhautscheitelabstand 34 gemäß der Gebrauchsstellung des Brillenglases 10 relativ zu dem Auge 12 im Bezugsystem von Brille 10 und Auge 12 des Brillenträgers ist. Falls das Brillenglas 10 keinen Scheitelpunkt 32 aufweist, kann die Lochblende 44 derart positioniert werden, daß die Position des Zentrums 54 der Öffnung 52 der Lochblende 44 relativ zu dem Brillenglas 10 gleich der Position der Eintrittspupille des Auges 12 entsprechend der Nullblickrichtung des Brillenträgers entspricht.

Ferner ist in **Figur 4** eine weitere Ausführungsform der vorliegenden Erfindung dargestellt. Diese Ausführungsform entspricht einer Darstellung des Gesichtsfelds. In Figur ist, in Analogie zu Figur 1, ein Brillenglas 10 und ein Auge 12 dargestellt. Ferner ist der Strahlengang 20, 22, 24 des Auges 12 symbolisch dargestellt. Eine optische Achse 38 des Brillenglases 10 ist als strichpunktierte Linie dargestellt. Ferner ist der Hornhautscheitelabstand 34 eingezeichnet

Figur 4 zeigt außerdem einen Abstand 82 einer Eintrittspupille 84 des Auges 12 von einem Scheitelpunkt 32 einer dem Auge 12 zugewandten Fläche 40 des Brillenglases 10. Der Abstand 82 wird auch als Pupillenabstand 82 bezeichnet.

Die Lochblende 44 kann folglich wie in Figur 2 dargestellt relativ zu dem Brillenglas angeordnet sein, wobei die Abstand 56 der Öffnung 52 von dem Scheitelpunkt 32 im wesentlichen dem Abstand 36 des Scheitelpunktes 32 von dem Augendrehpunkt 26 entspricht. Hierbei ist eine Messung der Verzeichnung für das Blickfeld des Auges 12 des Benutzers der Brille möglich.

Alternativ kann die Lochblende 44 auch entsprechend der Anordnung der Eintrittspupille 84 des Auges 12 zu dem Scheitelpunkt 32 des Brillenglases 10 angeordnet sein. In diesem Fall entspricht der in Figur 2 dargestellte Abstand 56 der Öffnung 52 der Lochblende 44 von dem Scheitelpunkt 32 im wesentlichen dem Pupillenabstand 82, wie in Figur 4 dargestellt. Anhand einer derartigen Ausgestaltung der erfindungsgemäßen Vorrichtung ist es möglich, die Verzeichnung dem Gesichtsfeld des Benutzer der Brille entsprechend zu detektieren bzw. zu messen bzw. darzustellen.

Herkömmlicherweise liegt die Eintrittspupille 84 des Auges 12 etwa 3 mm hinter dem Hornhautscheitel des Auges 12.

Die folgende Erfindung ist nicht auf die obig beschriebenen bevorzugten Ausführungsformen beschränkt. Vielmehr umfaßt die Erfindung auch Vorrichtungen bzw. Verwendungen von Vorrichtungen, welche von der obigen Vorrichtung abweichen. Beispielsweise kann die Haltevorrichtung 48 zusätzliche Schienen und Gelenke aufweisen, um das Brillenglas 10 relativ zu der Lochblende 44 zu verschwenken bzw. zu verschieben und/oder die Lochblende 44 relativ zu dem Brillenglas 10. Ferner kann das Brillenglas 10 ein progressives Brillenglas 10 mit zwei progressiven Flächen sein, welches keinen Scheitelpunkt 32 und keine optische Achse 38 aufweist.

Weiterhin ist zwischen dem Brillenglas 10 und der Lochblende 44 vorzugsweise kein weiteres optisches Element angeordnet, sondern lediglich ein Medium mit einem im wesentlichen homogenen Brechungsindex, wie beispielsweise Luft. Ebenso ist zwischen der Lochblende 44 und dem CCD-Chip 46 kein weiteres optisches Element angeordnet, sondern vorzugsweise lediglich ein Medium mit im wesentlichen homogenen Brechungsindex, wie beispielsweise Luft. Es ist auch möglich, daß an der Fläche 64 des CCD-Chips 46 weitere optische Elemente in Form von Linsen und/oder Prismen angeordnet sind.

Ferner muß der Pfeil 60 nicht an der Anordnungsachse 58 angeordnet sein, sondern kann auch von der Anordnungsachse 58 versetzt bzw. davon beabstandet angeordnet sein. Der Pfeil 60 kann ferner durch ein Gitter oder eine photographische Abbildung ersetzt werden.

Das Brillenglas 10 kann beispielsweise auch eine vorbestimmte bzw. vorbestimmbare Neigung gegenüber der Anordnungsachse 58 aufweisen, welche beispielsweise einer Vorneigung des Brillenglases 10 in Gebrauchsstellung entspricht.

**Bezugszeichenliste**

| | |
|---|---|
| 10 | Brillenglas |
| 12 | Auge |
| 14 | Blickrichtung nach oben |
| 16 | Blickrichtung nach vorne |
| 18 | Blickrichtung nach unten |
| 20 | Strahlengang |
| 22 | Strahlengang |
| 24 | Strahlengang |
| 26 | Augendrehpunkt |
| 28 | Apex der Hornhaut |
| 30 | Hornhaut |
| 32 | Scheitelpunkt |
| 34 | Abstand / Hornhautscheitelabstand |
| 36 | Abstand |
| 38 | optische Achse |
| 40 | augseitige Fläche / hintere Fläche / der Lochblende zugewandte Fläche |
| 42 | Vorrichtung |
| 44 | Lochblende |
| 46 | CCD-Chip |
| 48 | Haltevorrichtung |
| 50 | Strahlengang |
| 52 | Öffnung |
| 54 | Zentrum |
| 56 | Abstand |
| 58 | Anordnungsachse |
| 60 | abzubildendes Objekt / Pfeil |
| 62 | abgebildeter Pfeil |
| 64 | Fläche |
| 66 | Abstand |
| 68 | Analyseeinrichtung / Computer |
| 70 | Ausgabeeinrichtung / Monitor |
| 72 | Hauptebene |

74 Hauptebene
76 Objektweite
78 Bildweite
80 paraxialer Pfeil
82 Abstand / Pupillenabstand
84 Eintrittspupille

**Patentansprüche**

1. Vorrichtung (42) zum Visualisieren und/oder Bestimmen einer Verzeichnung eines Brillenglases (10) mit

   - einer Anordnungseinrichtung (48) und
   - einer Lochblende (44), wobei

   die Anordnungseinrichtung (48) ausgelegt ist,

   - ein abzubildendes Objekt (60),
   - ein Brillenglas (10),
   - die Lochblende (44) und
   - eine bildformende Einrichtung (46)

   entsprechend einer vorbestimmten bzw. vorbestimmbaren Position derart zu positionieren, daß das Objekt (60) anhand des Brillenglases (10) und der Lochblende (44) auf die bildformende Einrichtung (46) abbildbar ist.

2. Vorrichtung (42) nach Anspruch 1, wobei eine Öffnung (52) der Lochblende (44) einen Durchmesser zwischen etwa 0,1 mm und etwa 0,3 mm aufweist.

3. Vorrichtung (42) nach Anspruch 1 oder 2, wobei die Anordnungseinrichtung (48) ausgelegt ist, eine Öffnung (52) der Lochblende (44), das Brillenglas (10) und die bildformende Einrichtung (46) entlang einer Anordnungsachse, insbesondere der optischen Achse (38) des Brillenglases (10) zu positionieren.

4. Vorrichtung (42) nach Anspruch 1, 2 oder 3, wobei die Lochblende (44) derart ausgelegt ist, daß die folgende Bedingung gilt:

$$D < \sqrt{\frac{2\lambda ab}{a+b}} \, ,$$

wobei

   $D$ der Durchmesser der Lochblende (44),
   $a$ der Abstand (56) des Brillenglases (10) von der Lochblende (44),
   $b$ der Abstand (66) der bildformenden Einrichtung (46) von der Lochblende (44) und
   $\lambda$ die Wellenlänge des eingestrahlten Lichts ist und

   wobei ferner gilt:

$$\lambda \geq 400\,nm \, , \text{ insbesondere } \lambda \approx 546\,nm \, .$$

5. Vorrichtung (42) nach einem der vorangegangenen Ansprüche, wobei die Lochblende (44) ein optisches Element oder mehrere der optischen Elemente wie Planplatten, Prismen oder Linsen aufweist.

6. Vorrichtung (42) nach einem der vorangegangenen Ansprüche, wobei die Anordnungseinrichtung (48) ausgelegt ist, das Brillenglas (10) und die Lochblende (44) derart anzuordnen, daß ein Abstand (56) zwischen einem Scheitelpunkt (32) des Brillenglases (10) einer der Lochblende (44) zugewandten Fläche (40) des Brillenglases (10) von einem Zentrum (54) einer Öffnung (52) der Lochblende (44) mit einem bestimmten Pupillenabstand (82) eines Benutzers des Brillenglases (10) in Gebrauchsstellung im wesentlichen identisch ist.

7. Vorrichtung (42) nach einem der vorangegangenen Ansprüche, wobei die Anordnungseinrichtung (48) derart ausgelegt ist, daß der Abstand (56) zwischen einem Scheitelpunkt (32) des Brillenglases (10) einer der Lochblende (44) zugewandten Fläche (40) des Brillenglases (10) und dem Zentrum (54) der Öffnung (52) der Lochblende (44) zwischen etwa 8 mm und etwa 33 mm ist, bevorzugt zwischen etwa 10 mm und etwa 30 mm ist.

8. Vorrichtung (42) nach einem der Ansprüche 1 bis 5, wobei die Anordnungseinrichtung (48) ausgelegt ist, das Brillenglas (10) und die Lochblende (44) derart anzuordnen, daß ein Abstand (56) zwischen einem Scheitelpunkt (32) des Brillenglases (10) einer der Lochblende (44) zugewandten Fläche (40) des Brillenglases. (10) von einem Zentrum (54) einer Öffnung (52) der Lochblende (44) mit einem bestimmten Abstand (36) eines augenseitigen Scheitelpunktes (32) des Brillenglases von einem Augendrehpunkt (26) eines Auges (12) eines Benutzers des Brillenglases (10) in Gebrauchsstellung im wesentlichen identisch ist.

9. Vorrichtung (42) nach einem der Ansprüche 1 bis 5, wobei die Anordnungseinrichtung (48) derart ausgelegt ist, daß der Abstand (56) zwischen einem Scheitelpunkt (32) des Brillenglases (10) einer der Lochblende (44) zugewandten Fläche (40) des Brillenglases (10) und einem Zentrum (54) einer Öffnung (52) der Lochblende (44) zwischen etwa 16 mm und etwa 46 mm ist, bevorzugt zwischen etwa 21 mm und etwa 41 mm ist.

10. Vorrichtung (42) nach einem der vorangegangenen Ansprüche, wobei die Anordnungseinrichtung (48) derart ausgelegt ist, daß die Lochblende (44) relativ zu dem Brillenglas (10) bewegbar ist.

11. Vorrichtung (42) nach einem der vorangegangenen Ansprüche, wobei die Anordnungseinrichtung (48) zu einer derartigen Positionierung der Lochblende (44) und/oder des Brillenglases (10) ausgelegt ist, daß eine Achse der Lochblende (44), insbesondere eine Normalenachse der Lochblende (44), welche im wesentlichen das Zentrum (54) einer Öffnung (52) der Lochblende (44) schneidet, eine Achse des Brillenglases (10), insbesondere die optische Achse (38) des Brillenglases (10) in einem vorbestimmbaren Schnittpunkt und unter einem vorbestimmbaren Schnittwinkel schneidet.

12. Vorrichtung (42) nach Anspruch 11, wobei die Anordnungseinrichtung (48) ausgelegt ist, daß der Schnittwinkel zwischen der Achse der Lochblende (48) und der Achse des Brillenglases (10) bei im wesentlichen konstantem Schnittpunkt veränderbar ist.

13. Vorrichtung (42) nach Anspruch 11 oder 12, wobei die bildformende Einrichtung (46) ausgelegt ist, bei verschiedenen Schnittwinkeln Bilddaten des Objekts (60) zu generieren.

14. Vorrichtung (42) nach einem der vorangegangenen Ansprüche, wobei die bildformende Einrichtung (46) einen digitalen Sensorchip umfaßt.

15. Vorrichtung (42) nach einem der vorangegangenen Ansprüche mit einer elektronischen Datenverarbeitungsanlage (68, 70) zum Auswerten von Bilddaten der bildformenden Einrichtung (46).

16. Vorrichtung (42) nach einem der vorangegangenen Ansprüche, wobei die Vorrichtung (42) das abzubildende Objekt (60) und/oder die bildformende Einrichtung (46) aufweist.

17. Verfahren zum Visualisieren und/oder Bestimmen einer Verzeichnung eines Brillenglases (10) mit den Schritten:

    - Bereitstellen

        -- eines abzubildenden Objekts (60),
        -- eines Brillenglases (10),
        -- einer Lochblende (44) und
        -- einer bildformenden Einrichtung (46), wobei

    ein Abstand (56) zwischen einem Scheitelpunkt (32) des Brillenglases (10) einer der Lochblende (44) zugewandten Fläche (40) des Brillenglases (10) von einem Zentrum (54) einer Öffnung (52) der Lochblende (44) mit einem bestimmten Pupillenabstand (82)oder

mit einem bestimmten Abstand des Scheitelpunktes (32) der augseitigen Fläche (40) des Brillenglases (10) von dem Augendrehpunkt (26) des Auges (12) eines Benutzers des Brillenglases (10) in Gebrauchsstellung im wesentlichen identisch ist und

- Abbilden des Objekts (60) mittels des Brillenglases (10) und der Lochblende (44) auf die bildformende Einrichtung (46).

18. Verfahren nach Anspruch 17, mit dem weiteren Schritt:

- Analysieren einer Abbildung (62) des Objekts (60) anhand einer Analyseeinrichtung (68, 70).

19. Verwendung einer Vorrichtung (42) nach einem der vorangegangenen Ansprüche zum Visualisieren und/oder Bestimmen der Verzeichnung eines Brillenglases (10).

20. Verwendung der Vorrichtung (42) nach Anspruch 19, wobei das Brillenglas (10) und die Lochblende (44) derart angeordnet sind, daß ein Abstand (56) zwischen einem Scheitelpunkt (32) des Brillenglases (10) einer der Lochblende (44) zugewandten Fläche (40) des Brillenglases (10) von einem Zentrum (54) einer Öffnung (52) der Lochblende (44) mit einem bestimmten, insbesondere verordneten Pupillenabstand (82)eines Benutzers des Brillenglases (10) in Gebrauchsstellung im wesentlichen identisch ist.

21. Verwendung der Vorrichtung (42) nach Anspruch 19, wobei das Brillenglas (10) und die Lochblende (44) derart angeordnet sind, daß ein Abstand (56) zwischen einem Scheitelpunkt (32) des Brillenglases (10) einer der Lochblende (44) zugewandten Fläche (40) des Brillenglases (10) von einem Zentrum (54) einer Öffnung (52) der Lochblende (44) mit einem bestimmten, insbesondere verordneten Abstand zwischen dem Scheitelpunkt (32) des Brillenglases (10) und dem Augendrehpunkt (26) des Benutzer in Gebrauchsstellung des Brillenglases (10) im wesentlichen identisch ist.

Figur 1

Figur 2

Figur 3

Figur 4

**EP 1 818 662 A1**

Europäisches
Patentamt

**EUROPÄISCHER RECHERCHENBERICHT**

Nummer der Anmeldung

EP 07 00 3061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HECHT, EUGENE: "Optik" 1989, ADDISON-WESLEY PUBLISHING COMPANY, INC. , XP002434413 * Seite 244 - Seite 246; Abbildung 6.30 * ----- | 1-21 | INV. G01M11/02 G02C7/02 |
| X | US 2 114 282 A (AMES JR ADELBERT ET AL) 19. April 1938 (1938-04-19) * Seite 1, linke Spalte, Zeile 30 - rechte Spalte, Zeile 32 * * Abbildungen 4,4a * * Seite 3, linke Spalte, Zeile 18 - Seite 5, linke Spalte, Zeile 40 * * Seite 6, rechte Spalte, Zeile 14 - Zeile 17 * ----- | 1,3,5-7, 10-20 | |
| A | US 5 307 141 A (FUJIEDA MASANO [JP]) 26. April 1994 (1994-04-26) * Zusammenfassung; Abbildungen * ----- | 1-21 | |
| A | US 6 819 414 B1 (TAKEUCHI HITOSHI [JP]) 16. November 2004 (2004-11-16) * Zusammenfassung * ----- | | RECHERCHIERTE SACHGEBIETE (IPC) G02C G01M |

Der vorliegende Recherchenbericht wurde für alle Patentansprüche erstellt

| Recherchenort | Abschlußdatum der Recherche | Prüfer |
|---|---|---|
| München | 22. Mai 2007 | Windecker, Robert |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 07 00 3061

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 2114282 | A | 19-04-1938 | KEINE | | |
| US 5307141 | A | 26-04-1994 | JP | 3161787 B2 | 25-04-2001 |
| | | | JP | 6082333 A | 22-03-1994 |
| US 6819414 | B1 | 16-11-2004 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. SCHRÖDER.** Technische Optik. Vogel-Verlag, 1977
- **DR. ROLAND ENDERS.** Die Optik des Auges und der Sehhilfen. Optische Fachveröffentlichungen GmbH, 1995
- **HEINZ DIEPES ; RALF BLENDOWKSI.** Optik und Technik der Brille. Optische Fachveröffentlichung GmbH, 2002